# EUROPÄISCHE PATENTSCHRIFT

(11) **EP 3 881 649 B1**
(45) Veröffentlichungstag und Bekanntmachung des Hinweises auf die Patenterteilung: **04.06.2025**
(21) Anmeldenummer: 19790526.8
(22) Anmeldetag: 21.10.2019
(51) Int. Cl.: H05B 6/36, H05B 6/10

(54) **INDUKTOR UND VORRICHTUNG ZUM INDUKTIVEN ERWÄRMEN VON BAUTEILEN UND VERFAHREN DAFÜR**
INDUCTOR AND APPARATUS FOR INDUCTIVELY HEATING COMPONENTS AND METHOD THEREFOR
INDUCTEUR ET DISPOSITIF DE CHAUFFAGE DE COMPOSANTS PAR INDUCTION ET PROCÉDÉ ASSOCIÉ

(30) Priorität: 12.11.2018 DE 102018219213
(43) Veröffentlichungstag der Anmeldung: 22.09.2021
(73) Patentinhaber: Robert Bosch GmbH, 70442 Stuttgart (DE)
(72) Erfinder: HANSEL, Marcus, 71155 Altdorf (DE); AUTENRIETH, Hermann, 75015 Ruit (DE)
(86) Internationale Anmeldenummer: PCT/EP2019/078542
(87) Internationale Veröffentlichungsnummer: WO 2020/099070

(56) Entgegenhaltungen:
- EP-A1- 0 430 138
- EP-A1- 0 743 289
- EP-A1- 0 771 764
- CH-A- 358 879
- DE-A1- 1 758 683
- RUNK R B: "A ZIRCONIA INDUCTION FURNACE FOR DRAWING PRECISION SILICA WAVE GUIDES", TOPICAL MEETING ON OPTICAL FIBER TRANSMISSION II, XX, XX, vol. 2, 22 February 1977 (1977-02-22), pages TUB5 - 01, XP000576993

## Beschreibung

Die Erfindung betrifft einen Induktor zum induktiven Erwärmen von Bauteilen, eine Vorrichtung, die einen derartigen Induktor umfasst, und ferner ein Verfahren, das insbesondere zum Betreiben einer derartigen Vorrichtung dient.

### Stand der Technik

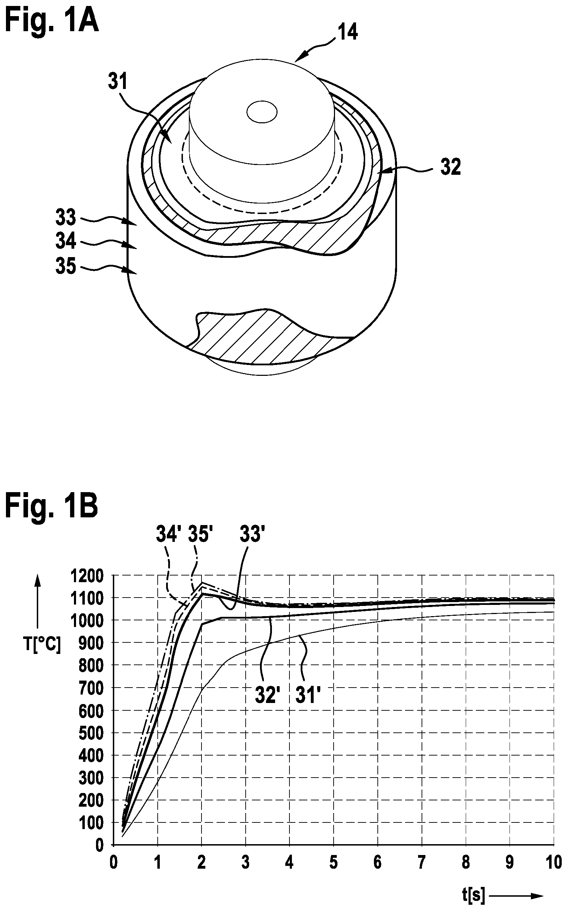

Derartige Induktoren werden typischerweise zur Wärmebehandlung von Bauteilen, bei denen es sich beispielsweise um Wellen oder Exzenter handeln kann, eingesetzt, wo zum Verschleißschutz eine erhöhte Strukturfestigkeit bzw. gesteigerte Härte des Gefüges erforderlich ist. Dabei erzeugt eine derartiger Induktor über ein Magnetfeld im Bauteil bzw. Werkstück Wirbelströme, welche zu einer Erhöhung der Temperatur im Bauteil führen. Die Bauteilgeometrie und der auftretende Skin-Effekt bei der Erwärmung führen insbesondere an Oberflächenbereichen des Bauteils zu einer inhomogenen Temperaturverteilung, wie in Fig. 1A anhand eines während der induktiven Wärmebehandlungsphase dargestellten Bauteils und in Fig. 1B anhand einer zugeordneten zeitlichen Temperaturentwicklung illustriert ist. Daraus resultiert eine Temperaturerhöhung von oberflächennahen Prozesszonen gegenüber oberflächenferneren Bereichen, was zu unterschiedlichen Strukturfestigkeiten innerhalb des Mikrogefüges eines entsprechend wärmebehandelten Bauteils führt.

Aus der EP 0 771 764 A1 und der EP 0 743 289 A1 ist eine Vorrichtung zur Heizung eines Glasstabes bekannt, wobei die Vorrichtung einen Induktionsherd zum Ziehen optischer Glasfasern aus einer Vorform umfasst.

### Offenbarung

### Vorteile der Erfindung

Der Induktor mit den kennzeichnenden Merkmalen des Patentanspruchs 1 hat den Vorteil, dass mit dem erfindungsgemäßen Induktor in einem damit behandelten Bauteil homogenere Temperaturverteilungen einstellbar sind und mithin Bauteile mit qualitativ gleichmäßigeren Strukturfestigkeiten erzielbar bzw. herstellbar sind. Dazu weist die etwa ringförmig ausgebildete Spule einen Durchgang auf, welcher die Spule von ihrer Innenumfangsfläche bis zu ihrer Außenumfangsfläche als Aussparung durchsetzt, um elektromagnetische Strahlung von innen nach außen über den Durchgang durchzulassen und messtechnisch erfassen zu können. Dadurch ist es möglich, Wärmestrahlung, welche von einem im Innenraum der ringförmigen Induktionsspule des Induktors während der induktiven Wärmebehandlung aufgenommenen Bauteil über den Durchgang nach außen gelangt, außerhalb des Induktors messtechnisch zu erfassen und der erfassten Wärmestrahlung eine Temperatur zuzuordnen, die Aufschluss über die Prozessentwicklung in einer oberflächennahen Prozesszone gibt und somit einen Zugriff auf die Prozessqualität erlaubt im Unterschied zu herkömmlichen Induktoren, bei denen diese Prozesszone vollständig abgeschirmt und somit in messtechnischer Hinsicht unzugänglich ist.

Zweckmäßigerweise erstreckt sich der Durchgang in etwa radialer Richtung, wobei der Durchgang eine Eintrittsöffnung an der Innenumfangsfläche und an seinem anderen Ende eine Austrittsöffnung an der Außenumfangsfläche aufweist, so dass Reflektionsverluste der transmittierten Wärmestrahlung an der Wandung des Durchgangs auf möglichst niedrigem Niveau bleiben.

Vorzugsweise erstreckt sich der Durchgang etwa geradlinig und weist zudem einen etwa kreisförmigen Innenquerschnitt auf, um eine optimale Strahlführung zu erzielen.

Eine Weiterbildung der Erfindung kann darin bestehen, dass der Durchgang bezüglich einer Längsachsenerstreckungsrichtung des Induktors etwa auf halber Höhe verläuft. Dadurch durchgreift der Durchgang - in axialer Richtung gesehen - etwa in der Mitte zwischen einer unteren und einer oberen Begrenzung des Induktors einen Ringabschnitt des Induktors, was eine messtechnische Zugriffsmöglichkeit auf eine Prozesszone eröffnet, welche sich in einem Einflussbereich von höherer Feldstärke befindet im Vergleich zur unteren und oberen Begrenzung des Induktors, wo die Feldstärke naturgemäß stark abfällt.

Bei einer Vorrichtung, welche einen derartigen Induktor umfasst, ist vorgesehen, dass ein Pyrometer derart bezüglich des Durchgangs angeordnet ist, dass ein Objektiv des Pyrometers der Austrittsöffnung des Durchgangs zugewandt ist. Die über den Durchgang austretende Wärmestrahlung kann dann in das Objektiv des Pyrometers gelangen und auf den Sensor des Pyrometers zur Detektion abgebildet werden.

Um eine optimale Photonenausbeute zu erzielen, ist gemäß einer vorteilhaften Ausgestaltung der Erfindung das Objektiv des Pyrometers mit seiner optischen Achse koaxial zur Längserstreckungsrichtung des Durchgangs ausgerichtet.

Eine vorteilhafte und bevorzugte Ausgestaltung der Erfindung kann darin bestehen, dass das Pyrometer als Quotienten-Pyrometer ausgebildet ist. Bei einem Quotienten-Pyrometer, das häufig auch als Zwei-Farben-Pyrometer bezeichnet wird, wird die einfallende Wärmestrahlung bei zwei unterschiedlichen Wellenlängen bzw. Wellenlängenbereichen gemessen, so dass zur Temperaturbestimmung die Kenntnis des Emissionsgrads des die Wärmestrahlung erzeugenden Messobjekts bzw. Bauteils entfallen kann.

Eine zweckmäßige Ausgestaltung der Erfindung sieht vor, dass eine Prozessrecheneinrichtung mit dem Pyrometer in einer Signal- und/oder Datenübertragungsverbindung steht, um vom Pyrometer ausgangsseitig übertragene Messsignale und/oder Messdaten zu empfangen und zu verarbeiten. Indem zudem die Prozessrecheneinrichtung in einer Steuerungsverbindung mit einem Generator zum Erzeugen elektrischer Leistung für den Induktor steht, ist der Wärmebehandlungsprozess steuerbar. Dazu berechnet die Prozessrecheneinrichtung basierend auf von dem Pyrometer empfangenen Temperaturmesssignalen und/oder Temperaturmessdaten Parameter zum Steuern der induktiven Wärmebehandlung.

Ein Verfahren, das insbesondere zum Betreiben der Vorrichtung geeignet ist, umfasst die Verfahrensschritte a) des Aktivierens des Induktors, b) des Erfassens von über den Durchgang des Induktors aus einem Bereich des im Induktor aufgenommenen Bauteils kommender Wärmestrahlung, wobei aus der erfassten Wärmestrahlung eine dem jeweiligen Bereich lokal zugeordnete Temperatur ermittelt wird, c) des Vergleichens der jeweils für den jeweiligen Bereich ermittelten Temperatur mit einem Referenzwert, und d) des Nachregelns von Prozessparametern, wenn beim Vergleich eine Abweichung zwischen der erfassten Temperatur und dem Referenzwert ermittelt wird, wobei das Nachregeln nach Maßgabe der ermittelten Abweichung erfolgt. Als Referenzwert wird eine Temperatur eingesetzt, die aus einer Temperaturverteilungssimulation für das Bauteil für denjenigen Bereich extrahiert wird, welcher dem Erfassen gemäß Verfahrensschritt b) entsprechend zugrunde liegt. Dabei erfolgt die Temperaturverteilungssimulation auf Basis einer Berechnung eines von dem Induktor erzeugten elektromagnetischen Felds, von durch das Feld im Bauteil induzierten Wirbelströmen, einer infolgedessen dort erzeugten Wärmeenergie und einer sich dadurch im Bauteil ausbildenden Temperaturverteilung.

Als Prozessparameter wird/werden die dem Induktor während seiner Aktivierung zugeführte elektrische Leistung und/oder die Zeitdauer der Aktivierung des Induktors und/oder eine Vorschubgeschwindigkeit, mit welcher der Induktor während seiner Aktivierungsdauer entlang seiner Längsachse, d.h. relativ zu einem jeweils zu behandelnden Bauteil, bewegt wird, ausgewählt. Das erfindungsgemäße Verfahren ermöglicht vorteilhaft durch den - über den im Induktor ausgebildeten Durchgang - direkten messtechnischen Zugriff auf die Prozesszone eine ziemlich exakte Einstellung des Gefügezustands im Bauteil, denn unerwünschte Temperaturanstiege in der Prozesszone sind rechtzeitig erfassbar und können durch Nachregeln weitgehend und praktisch instantan reduziert werden.

Zweckmäßigerweise werden in der Simulation Geometrie und/oder Materialeigenschaften eines jeweils zu behandelnden Bauteils berücksichtigt, um das Bauteil möglichst exakt modellieren zu können.

Weitere vorteilhafte Weiterbildungen und Ausgestaltungen der Erfindung ergeben sich durch die in den Unteransprüchen aufgeführten Maßnahmen.

### Kurze Beschreibung der Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1A eine Simulation einer 3D-Temperaturverteilungsansicht eines in einer induktiven Wärmebehandlungsphase befindlichen Bauteils,
Fig. 1B ein Diagramm mit einer Vielzahl von Temperaturverlaufskurven, wobei jede der Temperaturverlaufskurven die zeitliche Entwicklung der entlang der Ordinate aufgetragenen Temperatur für einen jeweiligen Bereich des Bauteils darstellt und mit der in Fig. 1A dargestellten 3D-Temperaturverteilungsansicht korrespondiert,
Fig. 2 eine stark schematisch gehaltene Perspektivansicht einer etwa ringförmigen Spule eines Induktors, der zum induktiven Erwärmen eines metallischen Bauteils dient und einen die Spule radial von innen nach außen durchsetzenden Durchgang aufweist,
Fig. 3 eine perspektivische Ansicht eines Teils der erfindungsgemäßen Vorrichtung mit dem Induktor von Fig. 1, in dessen Innenraum ein Bauteil aufgenommen ist,
Fig. 4 ein Blockschema zur Veranschaulichung der erfindungsgemäßen Vorrichtung, welche den in Fig. 1 dargestellten Induktor, einen Generator zur elektrischen Ansteuerung des Induktors, ein Pyrometer und eine mit dem Pyrometer in einer Messdatenübertragungsverbindung stehende Prozessrecheneinheit umfasst, und
Fig. 5 ein Flussdiagramm mit wesentlichen Verfahrensschritten des erfindungsgemäßen Verfahrens zum Betreiben der Vorrichtung von Fig. 4.

### Ausführungsformen der Erfindung

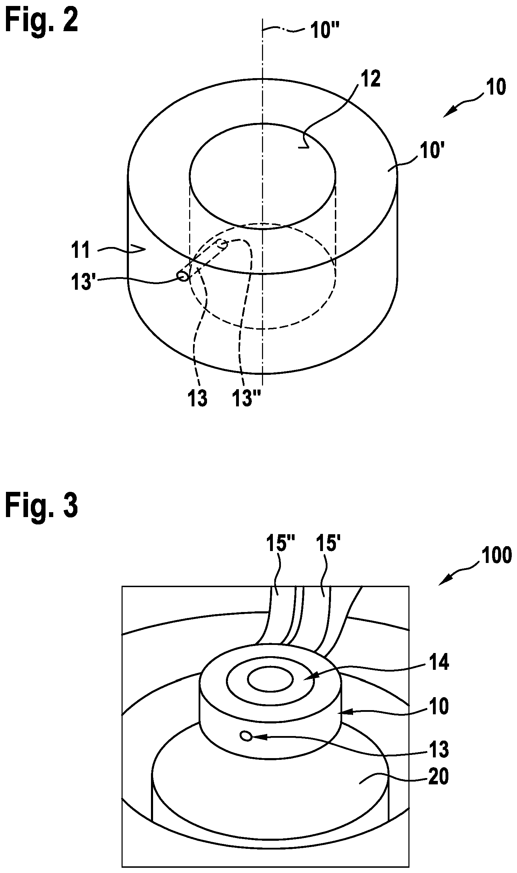

Bevor anhand von Fig. 2 bis 5 die wesentlichen Eigenschaften des erfindungsgemäßen Induktors und der erfindungsgemäßen Vorrichtung samt dem zum Be**treiben** der Vorrichtung geeigneten Verfahren erläutert werden, soll zunächst anhand von Fig. 1A und 1B die Charakteristik eines Induktors gemäß dem Stand der Technik erläutert werden.

Fig. 1A zeigt in einer Perspektivdarstellung eine Temperaturverteilung eines rotationssymmetrisch ausgebildeten Bauteils während einer typischen Wärmebehandlungsphase, welche mittels einer Simulation auf Basis einer Berechnung des von der Induktionsspule des Induktors erzeugten elektromagnetischen Felds, das im Bauteil Wirbelströme induziert, und der aufgrund von Wirbelstromverlusten im Bauteil entstehenden Wärmeenergie unter Berücksichtigung von Geometrie und Materialeigenschaften des Bauteils berechnet ist. In der simulierten Temperaturverteilung des Bauteils sind unterschiedliche Temperaturzonen, wie sie sich beispielsweise an verschiedenen Bereichen bzw. Orten 31 bis 35 auf der Oberfläche des Bauteils manifestieren, ausgebildet, die eine z.T. inhomogene Temperaturverteilung im Bauteil bewirken; in oberflächennahen Zonen des Bauteils herrschen aufgrund vorwiegend oberflächennah wirkender Wirbelströme generell höhere Temperaturen, während demgegenüber im Innern des Bauteils aufgrund der in der Simulation berücksichtigten Wärmeleitung deutlich reduzierte Temperaturen herrschen. Dazu zeigt Fig. 1B ein Diagramm mit insgesamt fünf Temperaturverlaufskurven 31' - 35', wobei für die jeweiligen Temperaturverlaufskurven die Temperatur T für jeweils verschiedene Bereiche bzw. Orte 31 - 35 des in Fig. 2A dargestellten Bauteils in Abhängigkeit von der entlang der Abszisse aufgetragenen Zeit t dargestellt ist. Aus der Simulation ergibt sich für die Temperaturverlaufskurven 33' bis 35', die oberflächennahen Bereichen des Bauteils zugeordnet sind, nach einer jeweils steilen Anstiegsflanke zu Beginn der Wärmebehandlung eine jeweils deutliche Temperaturüberhöhung mit einer Temperaturspitze ≥ 1100 °C bei der Zeit t ≈ 2 s (auf der Zeitachse) im Vergleich zur Temperaturverlaufskurve 31' eines relativ oberflächenfernen Bereichs 31.

Fig. 2 zeigt in einer stark schematisch gehaltenen Perspektivansicht einen im Ganzen mit 10 bezeichneten Induktor, der zum induktiven Erwärmen von metallischen Bauteilen dient. Der Induktor 10 weist eine Spule 10' auf, die aufgrund einer Außenumfangsfläche 11 und einer konzentrisch - bezüglich einer Längsmittelachse 10" der Spule 10' - dazu angeordneten Innenumfangsfläche 12 ringförmig bzw. hohlzylindrisch ausgebildet ist, um ein rotationssymmetrisch ausgebildetes Bauteil innerhalb seiner Innenumfangsfläche 11 aufnehmen und induktiv erwärmen zu können. Damit die während der induktiven Erwärmungsphase an der Oberfläche des in der Spule 10' aufgenommenen Bauteils herrschende Temperatur messtechnisch erfassen zu können, ist in der Spule 10' ein Durchgang 13 ausgebildet, welcher die Spule 10' in radialer Richtung so von innen nach außen durchsetzt, dass aus dem Innenraum der Spule 10' vom Bauteil abgestrahlte Wärmestrahlung nach außen passieren kann, wo ein in der Nähe einer Austrittsöffnung 13' des Durchgangs 13 angeordnetes Pyrometer die ankommende Strahlung detektieren kann, um daraus eine Temperatur zu ermitteln. Der sich geradlinig in radialer Richtung erstreckende Durchgang 13 weist somit eine Austrittsöffnung 13' an der Außenumfangsfläche 11 und an seinem anderen Ende eine der Austrittsöffnung 13' gegenüberliegende Eintrittsöffnung 13" an der Innenumfangsfläche 12 auf.

In herstellungstechnischer Hinsicht wird zum Ausbilden des Durchgangs 13 beim Wickeln der Spule z.B. ein hohlzylindrisches Röhrchen zu Beginn des Wicklungsvorgangs an einen Stützkörper angebracht bzw. angeordnet und gegebenenfalls am Ende des Wicklungsvorgangs wieder entfernt.

Fig. 3 zeigt in einer perspektivischen Darstellung einen Teil der erfindungsgemäßen Vorrichtung 100 zum induktiven Erwärmen eines Bauteils 14, das in dem Innenraum des Induktors 10 um seine Symmetrieachse drehbar aufgenommen ist. Dazu ist das Bauteil 14 auf einem drehbar ausgebildeten Halteeinrichtung 20 montiert und rotiert während der Wärmebehandlung um seine Symmetrieachse bzw. Längsmittelachse, damit eine möglichst homogene Temperaturverteilung in dem Bauteil 14 erzielt wird. Während der Aktivierungsdauer des Induktors 10, der über die elektrischen Anschlüsse 15', 15" mit einem in Fig. 3 nicht dargestellten Generator elektrisch wirkverbunden ist. Über den Durchgang 13 des Induktors 10 kann ein entsprechend ausgerichtetes Pyrometer (nicht in Fig. 3 dargestellt) diejenige Wärmestrahlung erfassen, die von dem dem Durchgang 13 unmittelbar angrenzenden und radial zugewandten Bereich auf der Oberfläche des Bauteils 14 abgestrahlt wird, und daraus die Temperatur ermitteln, die dort herrscht.

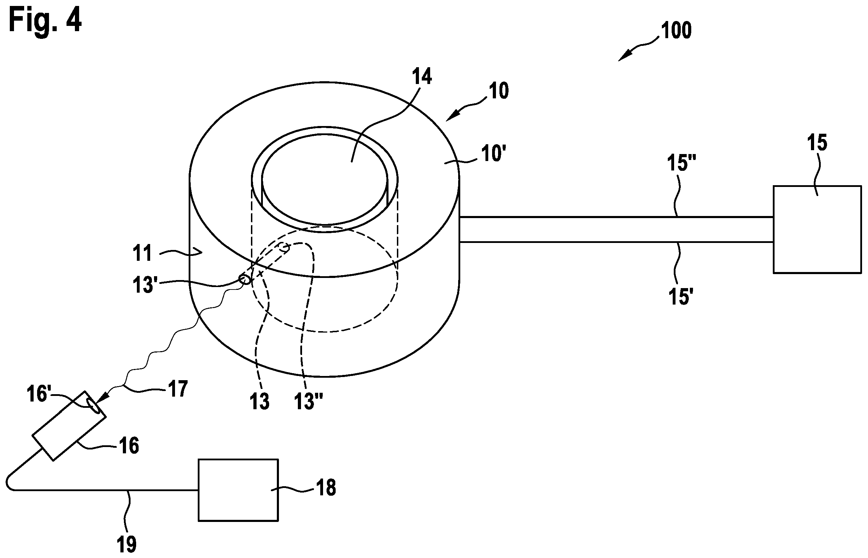

Fig. 4 zeigt in einer stark schematisch gehaltenen Ansicht die erfindungsgemäße Vorrichtung 100, die im Wesentlichen den erfindungsgemäßen Induktor 10, einen Generator 15 zum Erzeugen der hochfrequenten elektrischen Leistung für den Induktor 10, die über elektrische Anschlussleitungen 15', 15" der Spule 10' des Induktors 10 zuführbar ist, ein Pyrometer 16 zum Detektieren von Wärmestrahlung 17, die von einem aus dem Innern der Spule 10' des Induktors 10 aufgenommenen Bauteil 14 abgestrahlt wird und über den Durchgang 13 des Induktors 10 nach außen gelangt, und eine Prozessrecheneinheit 18, die über eine Signal- und Datenübertragungsleitung 19 mit einem Ausgang des Pyrometers 16 in Verbindung steht, um Temperaturmessdaten von dem Pyrometer zu empfangen und verarbeiten. Dabei ist der Pyrometer 16 in der Nähe des Induktors 10 so angeordnet bzw. ausgerichtet, dass er mit seinem Objektiv bzw. seiner Eintrittslinse 16' mit der Längserstreckungsrichtung des Durchgangs 13 fluchtet, wobei das Objektiv 16' des Pyrometers 16 und die Austrittsöffnung 13' des Induktors 10 einander zugewandt sind. Die aus Objektiv 16' und Sensor (nicht dargestellt) gebildete Messachse des Pyrometers verläuft koaxial zur Längserstreckungsrichtung des Durchgangs 13. Dadurch kann das Objektiv 16' des Pyrometers 16 die aus der Austrittsöffnung 13' ankommende Wärmestrahlung 17 auf den Sensor abbilden, der die Strahlung erfasst und in elektrische Signale umwandelt. Im bevorzugten Ausführungsbeispiel ist das Pyrometer als Zwei-Farben-Pyrometer ausgebildet, so dass der Emissionsgrad des Messobjekts bzw. Bauteils bei der Temperaturermittlung ohne Belang ist. Da das Bauteil während der induktiven Wärmebehandlung mittels der drehbar ausgebildeten Halteeinrichtung 20 (Fig. 3) rotiert, kann das Pyrometer 16 über die erfasste Wärmestrahlung 17 den an der Eintrittsöffnung 13" des Durchgangs 13 während der Rotation vorbeilaufenden Bereich des Bauteils thermisch abtasten.

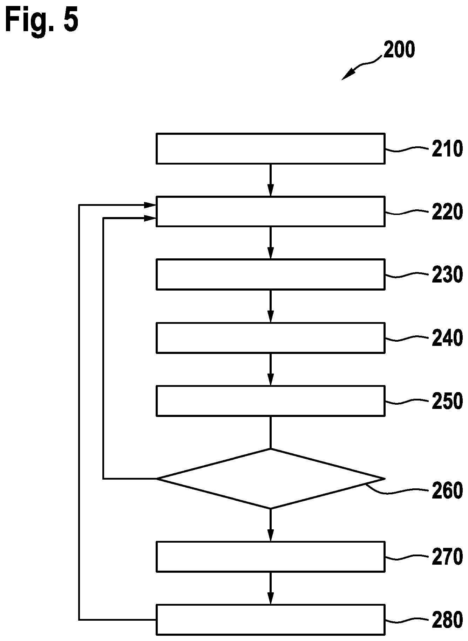

Fig. 5 zeigt ein Flussdiagramm mit den wesentlichen Verfahrensschritten des Verfahrens, das zum Betreiben der Vorrichtung 100 dient. In einem ersten Verfahrensschritt 210 wird der Induktor 10 aktiviert, indem die von dem Generator 15 erzeugte elektrische Leistung über die elektrischen Anschlussleitungen 15', 15" dem Induktor 10 zugeführt wird. Im Anschluss daran wird in einem Verfahrensschritt 220 die vom Bauteil 14 über den Durchgang 13 abgestrahlte Wärmestrahlung 17 von dem Pyrometer 16 innerhalb eines vorbestimmten Zeitintervalls Δt detektiert und ausgewertet, d.h. auf der Grundlage des Stefan-Boltzmann-Gesetzes eine jeweilige Temperatur zugeordnet, welche dem zum Zeitpunkt einer Messung einem jeweils der Eintrittsöffnung des Durchgangs 13 - in radialer Richtung gesehen - angrenzend zugewandten Bereich auf der Oberfläche des Bauteils zugeordnet ist, und in Temperaturmessdaten umgesetzt.

Gemäß einem darauf folgenden Verfahrensschritt 230 werden die von dem Pyrometer 16 ermittelten Temperaturmessdaten an die Prozessrecheneinheit 18 übertragen, worauf in einem unmittelbar daran anschließenden Verfahrensschritt 240 die übertragenen Temperaturmessdaten dort verarbeitet werden.

In einem weiteren Verfahrensschritt 250 wird in der Prozessrecheneinheit 18 die vom Pyrometer jeweils ermittelte Temperatur für einen - zum Zeitpunkt einer jeweiligen Messung - Bereich auf der Oberfläche des Bauteils mit einer Temperatur aus einer simulierten Temperaturverteilung des Bauteils verglichen, wobei die aus der simulierten Temperaturverteilung extrahierte Temperatur demselben Bereich auf der Oberfläche zugeordnet ist, der auch der jeweiligen Messung zugrunde liegt.

In einem anschließenden Prüfschritt 260 wird ermittelt, ob sich beim Vergleich eine Abweichung ΔT zwischen der anhand der detektierten Wärmestrahlung ermittelten Temperatur und der aus dem simulierten Temperaturverlauf extrahierten Temperatur ergibt. Im negativen Fall, d.h. wenn praktisch keine Abweichung vorliegt, erfolgt ein Rücksprung zu Schritt 220, so dass das Pyrometer für ein nächstes Zeitintervall Strahlung erfasst und daraus Temperaturmessdaten ermittelt. Im positiven Fall, d.h. wenn eine Abweichung ΔT vorliegt, erfolgt in einem daran anschließenden Verfahrensschritt 270 auf der Basis der ermittelten Temperaturabweichung ΔT eine Nachregelung des Prozesses, indem z.B. die elektrische Leistung des Generators und/oder die Behandlungsdauer und/oder die Vorschubgeschwindigkeit des Induktors in Abhängigkeit von der Abweichung ΔT innerhalb einer Regelschleife nachgeführt wird. Im Anschluss an die Nachregelung erfolgt in einem Verfahrensschritt 280 solange ein Rücksprung zu Schritt 220, bis die vorbestimmte Wärmebehandlungsdauer erreicht wird.

Vorteilhaft gibt bei dem erfindungsgemäßen Verfahren die vom Pyrometer 16 über den Durchgang 13 erfasste elektromagnetische Strahlung 17 und daraus ermittelte Temperatur als Messgröße Aufschluss über die Wärme-Prozessentwicklung.

Zusammenfassend umfasst das erfindungsgemäße Verfahren 200 die Verfahrensschritte a) des Aktivierens 210 des Induktors 10, b) des Erfassens von über den Durchgang 13 des Induktors 10 aus einem Bereich des im Induktor aufgenommenen Bauteils 14 kommender elektromagnetischer Strahlung, wobei aus der erfassten Strahlung eine dem jeweiligen Bereich lokal zugeordnete Temperatur ermittelt wird, c) des Vergleichens 220 der jeweils für den jeweiligen Bereich ermittelten Temperatur mit einem Referenzwert, wobei als Referenzwert eine Temperatur eingesetzt wird, die aus einer Temperaturverteilungssimulation für das Bauteil für denjenigen Bereich extrahiert wird, welcher dem Erfassen gemäß Verfahrensschritt b) entsprechend zugrunde liegt, wobei die Temperaturverteilungssimulation auf Basis einer Berechnung eines von dem Induktor 10 erzeugten elektromagnetischen Felds, der durch das Feld im Bauteil induzierten Wirbelströme, der infolgedessen dort erzeugten Wärmeenergie und der durch Wärmeleitung im Bauteil sich ausbildenden Temperaturverteilung erfolgt, und d) des Nachregelns 280 von Prozessparametern, wenn beim Vergleichen eine Abweichung ΔT zwischen der erfassten Temperatur und dem Referenzwert ermittelt wird, wobei das Nachregeln nach Maßgabe der ermittelten Abweichung ΔT erfolgt.

Für die Modellierung der Temperaturverteilung im Bauteil kommen physikalisch basierte Simulationsmethoden zum Einsatz. Diese basieren auf der Finite-Elemente-Simulation von elektromagnetisch-thermischen Feldgleichungen. Für eine Klassifizierung der Temperaturfelder werden datenbasierte Methoden des maschinellen Lernens wie beispielsweise Support-Vektor-Maschinen oder Nearest-Neighbor-Ansätze verwendet.

## Patentansprüche

1. Induktor (10) zum induktiven Erwärmen von metallisch ausgebildeten Bauteilen mit wenigstens einer Spule, wobei die Spule etwa ringförmig ausgebildet ist und einen Durchgang (13) aufweist, welcher die Spule von ihrer Innenumfangsfläche bis zu ihrer Außenumfangsfläche als Aussparung durchsetzt, um Strahlung von innen nach außen über den Durchgang (13) durchzulassen, **dadurch gekennzeichnet, dass** das Bauteil in einem Innenraum des Induktors (10) um seine Symmetrieachse bzw. Längsmittelachse drehbar aufnehmbar ist, wobei das Bauteil (14) auf einer drehbar ausgebildeten Halteeinrichtung (20) montiert ist und während der Wärmebehandlung um seine Symmetrieachse bzw. Längsmittelasche rotiert, damit ein möglichst homogene Temperaturverteilung in dem Bauteil (14) erzielt wird.

2. Induktor nach Anspruch 1, **dadurch gekennzeichnet, dass** sich der Durchgang (13) in etwa radialer Richtung erstreckt.

3. Induktor nach Anspruch 1 oder 2, **dadurch gekennzeichnet, dass** der Durchgang (13) eine Eintrittsöffnung (13') an der Innenumfangsfläche und an seinem anderen Ende eine Austrittsöffnung (13") an der Außenumfangsfläche aufweist.

4. Induktor nach einem der Ansprüche 1 bis 3, **dadurch gekennzeichnet, dass** sich der Durchgang (13) etwa geradlinig erstreckt.

5. Induktor nach einem der Ansprüche 1 bis 4, **dadurch gekennzeichnet, dass** der Durchgang (13) einen etwa kreisförmigen Innenquerschnitt aufweist.

6. Induktor nach einem der Ansprüche 1, **dadurch gekennzeichnet, dass** der Durchgang (13) bezüglich einer Längsachsenerstreckungsrichtung des Induktors (10) etwa auf halber Höhe verläuft.

7. Vorrichtung umfassend einen Induktor gemäß einem der vorstehenden Ansprüche, wobei ein Pyrometer (16) derart bezüglich des Durchgangs (13) angeordnet ist, dass ein Objektiv (16') des Pyrometers (16) der Austrittsöffnung (13') des Durchgangs (13) zugewandt ist.

8. Vorrichtung nach Anspruch 7, **dadurch gekennzeichnet, dass** das Objektiv (16') des Pyrometers (16) mit seiner optischen Achse koaxial zur Längserstreckungsrichtung des Durchgangs (13) ausgerichtet ist.

9. Vorrichtung nach Anspruch 7 oder 8, **dadurch gekennzeichnet, dass** das Pyrometer (16) als Quotienten-Pyrometer ausgebildet ist.

10. Vorrichtung einem der Ansprüche 7 bis 9, **dadurch gekennzeichnet, dass** eine Prozessrecheneinrichtung (18) mit dem Pyrometer (16) in einer Signal- und/oder Datenübertragungsverbindung steht, um vom Pyrometer (16) ausgangsseitig übertragene Messsignale und/oder Messdaten zu empfangen und zu verarbeiten.

11. Vorrichtung nach Anspruch 10, **dadurch gekennzeichnet, dass** die Prozessrecheneinrichtung (18) in einer Steuerungsverbindung mit einem Generator zum Erzeugen elektrischer Leistung für den Induktor (10) steht.

12. Vorrichtung nach Anspruch 10 oder 11, **dadurch gekennzeichnet, dass** die Prozessrecheneinrichtung (18) basierend auf von dem Pyrometer (16) empfangenen Temperaturmesssignalen und/oder Temperaturmessdaten Parameter zum Steuern der induktiven Wärmebehandlung berechnet.

13. Verfahren insbesondere zum Betreiben der Vorrichtung nach einem der Ansprüche 7 bis 12 mit folgenden Verfahrensschritten:
a) Aktivieren (210) des Induktors (10),
b) Erfassen (220) von über den Durchgang (13) des Induktors (10) aus einem Bereich des im Induktor aufgenommenen Bauteils (14) kommender elektromagnetischer Strahlung, wobei aus der erfassten Strahlung eine dem jeweiligen Bereich lokal zugeordnete Temperatur ermittelt wird,
c) Vergleichen (240) der jeweils für den jeweiligen Bereich ermittelten Temperatur mit einem Referenzwert, und
d) Nachregeln (280) von Prozessparametern, wenn beim Vergleich eine Abweichung zwischen der erfassten Temperatur und dem Referenzwert ermittelt wird, wobei das Nachregeln nach Maßgabe der ermittelten Abweichung erfolgt, wobei das Bauteil (14) auf einer drehbar ausgebildeten Halteeinrichtung (20) montiert ist und während der Wärmebehandlung um seine Symmetrieachse bzw. Längsmittelachse rotiert, damit eine möglichst homogene Temperaturverteilung in dem Bauteil (14) erzielt wird.

14. Verfahren nach Anspruch 13, **dadurch gekennzeichnet, dass** als Referenzwert eine Temperatur eingesetzt wird, die aus einer Temperaturverteilungssimulation für das Bauteil für denjenigen Bereich extrahiert wird, welcher dem Erfassen (220) gemäß Verfahrensschritt b) entsprechend zugrunde liegt.

15. Verfahren nach Anspruch 14, **dadurch gekennzeichnet, dass** die Temperaturverteilungssimulation auf Basis einer Berechnung eines von dem Induktor (10) erzeugten elektromagnetischen Felds, von durch das Feld im Bauteil induzierten Wirbelströmen, einer infolgedessen dort erzeugten Wärmeenergie und einer sich dadurch im Bauteil ausbildenden Temperaturverteilung erfolgt.

16. Verfahren nach einem der Ansprüche 13 bis 15, **dadurch gekennzeichnet, dass** als Prozessparameter die dem Induktor (10) während seiner Aktivierung zugeführte elektrische Leistung und/oder die Zeitdauer der Aktivierung des Induktors (10) und/oder eine Vorschubgeschwindigkeit, mit welcher der Induktor (10) während seiner Aktivierungsdauer entlang seiner Längsachse (10") bewegt wird, ausgewählt wird/werden.

17. Verfahren nach einem der Ansprüche 14 bis 16, **dadurch gekennzeichnet, dass** in der Simulation Geometrie und/oder Materialeigenschaften eines jeweils zu behandelnden Bauteils berücksichtigt werden.

## Claims

1. Inductor (10) for inductively heating metallic components with at least one coil, wherein the coil is approximately annular and has a passage (13) which passes through the coil from its inner circumferential surface to its outer circumferential surface in the form of a cutout to allow radiation to pass from the inside to the outside through the passage (13), **characterized in that** the component is receivable in an interior of the inductor (10) so as to be rotatable about its axis of symmetry or longitudinal central axis, wherein the component (14) is mounted on a rotatably designed holding device (20) and rotates during the heat treatment about its axis of symmetry or longitudinal central axis to achieve the most homogeneous temperature distribution possible in the component (14).

2. Inductor according to Claim 1, **characterized in that** the passage (13) extends in the approximately radial direction.

3. Inductor according to Claim 1 or 2, **characterized in that** the passage (13) has an entry opening (13') at the inner circumferential surface and at its other end an exit opening (13") at the outer circumferential surface.

4. Inductor according to any of Claims 1 to 3, **characterized in that** the passage (13) extends approximately in a straight line.

5. Inductor according to any of Claims 1 to 4, **characterized in that** the passage (13) has an approximately circular inner cross section.

6. Inductor according to any of Claims 1, **characterized in that** the passage (13) extends at approximately half the height with respect to a direction of extent of the longitudinal axis of the inductor (10).

7. Apparatus comprising an inductor according to any of the preceding claims, wherein a pyrometer (16) is arranged with respect to the passage (13) in such a way that an objective (16') of the pyrometer (16) is facing the exit opening (13') of the passage (13).

8. Apparatus according to Claim 7, **characterized in that** the objective (16') of the pyrometer (16) is aligned with its optical axis coaxially to the direction of longitudinal extent of the passage (13).

9. Apparatus according to Claim 7 or 8, **characterized in that** the pyrometer (16) is in the form of a quotient pyrometer.

10. Apparatus according to any of Claims 7 to 9, **characterized in that** a process computing device (18) is connected to the pyrometer (16) for signal and/or data transmission to receive measurement signals and/or measurement data transmitted by the pyrometer (16) on the output side and to process them.

11. Apparatus according to Claim 10, **characterized in that** the process computing device (18) is connected in a control connection to a generator for generating electrical power for the inductor (10).

12. Apparatus according to Claim 10 or 11, **characterized in that** the process computing device (18) calculates parameters for controlling the inductive heat treatment based on temperature measurement signals and/or temperature measurement data received from the pyrometer (16).

13. Method, in particular, for operating the apparatus according to any of Claims 7 to 12, having the following method steps:
a) activating (210) the inductor (10),
b) detecting (220) electromagnetic radiation coming from a region of the component (14) received in the inductor via the passage (13) of the inductor (10), wherein a temperature locally assigned to the respective region is ascertained from the detected radiation,
c) comparing (240) in each case the temperature ascertained for the respective region with a reference value, and
d) readjusting (280) process parameters when a deviation between the detected temperature and the reference value is ascertained during the comparison, wherein the readjustment is carried out according to the ascertained deviation, wherein the component (14) is mounted on a rotatably designed holding device (20) and rotates during the heat treatment about its axis of symmetry or longitudinal central axis to achieve the most homogeneous temperature distribution possible in the component (14).

14. Method according to Claim 13, **characterized in that** a temperature which is extracted from a temperature distribution simulation for the component for that region on which the detection (220) according to method step b) is appropriately based is used as the reference value.

15. Method according to Claim 14, **characterized in that** the temperature distribution simulation is carried out on the basis of a calculation of an electromagnetic field generated by the inductor (10), of eddy currents induced by the field in the component, of a heat energy generated there as a result, and of a temperature distribution which occurs as a result in the component.

16. Method according to any of Claims 13 to 15, **characterized in that** the process parameters selected is/are the electrical power supplied to the inductor (10) during its activation and/or the duration of the activation of the inductor (10) and/or a feed rate at which the inductor (10) is moved along its longitudinal axis (10") during its activation duration.

17. Method according to any of Claims 14 to 16, **characterized in that** the geometry and/or material properties of a component to be treated in each case are taken into account in the simulation.

## Revendications

1. Inducteur (10) permettant de chauffer par induction des composants réalisés en métal, comprenant au moins une bobine, dans lequel la bobine est réalisée de manière approximativement annulaire et présente un passage (13) qui traverse la bobine de sa surface circonférentielle intérieure à sa surface circonférentielle extérieure sous forme d'évidement pour laisser passer un rayonnement de l'intérieur à l'extérieur à travers le passage (13), **caractérisé en ce que** le composant peut être logé dans un espace intérieur de l'inducteur (10) en rotation autour de son axe de symétrie ou son axe médian longitudinal, dans lequel le composant (14) est monté sur un dispositif de maintien (20) réalisé de manière rotative et tourne pendant le traitement thermique autour de son axe de symétrie ou son axe médian longitudinal afin d'obtenir une distribution de température aussi homogène que possible dans le composant (14).

2. Inducteur selon la revendication 1, **caractérisé en ce que** le passage (13) s'étend approximativement dans la direction radiale.

3. Inducteur selon la revendication 1 ou 2, **caractérisé en ce que** le passage (13) présente un orifice d'entrée (13') sur la surface circonférentielle intérieure et à son autre extrémité un orifice de sortie (13") sur la surface circonférentielle extérieure.

4. Inducteur selon l'une quelconque des revendications 1 à 3, **caractérisé en ce que** le passage (13) s'étend approximativement en ligne droite.

5. Inducteur selon l'une quelconque des revendications 1 à 4, **caractérisé en ce que** le passage (13) présente une section transversale intérieure approximativement circulaire.

6. Inducteur selon l'une quelconque des revendications 1, **caractérisé en ce que** le passage (13) s'étend approximativement à mi-hauteur par rapport à une direction d'étendue d'axe longitudinal de l'inducteur (10).

7. Dispositif, comprenant un inducteur selon l'une quelconque des revendications précédentes, dans lequel un pyromètre (16) est disposé par rapport au passage (13) de telle sorte qu'un objectif (16') du pyromètre (16) est tourné vers l'orifice de sortie (13') du passage (13).

8. Dispositif selon la revendication 7, **caractérisé en ce que** l'objectif (16') du pyromètre (16) avec son axe optique est orienté de manière coaxiale à la direction d'étendue longitudinale du passage (13).

9. Dispositif selon la revendication 7 ou 8, **caractérisé en ce que** le pyromètre (16) est réalisé sous la forme d'un pyromètre à quotient.

10. Dispositif selon l'une quelconque des revendications 7 à 9, **caractérisé en ce qu'**un dispositif d'ordinateur industriel (18) est en communication avec le pyromètre (16) dans une communication de transmission de signaux et/ou de données pour recevoir et traiter des signaux de mesure et/ou des données de mesure transmis côté sortie par le pyromètre (16).

11. Dispositif selon la revendication 10, **caractérisé en ce que** le dispositif d'ordinateur industriel (18) est en communication de commande avec un générateur pour produire une puissance électrique pour l'inducteur (10).

12. Dispositif selon la revendication 10 ou 11, **caractérisé en ce que** le dispositif d'ordinateur industriel (18) calcule des paramètres pour commander le traitement thermique par induction, sur la base de signaux de mesure de température et/ou de données de mesure de température reçus par le pyromètre (16).

13. Procédé, en particulier pour faire fonctionner le dispositif selon l'une quelconque des revendications 7 à 12, comprenant les étapes de procédé suivantes consistant à :
a) activer (210) l'inducteur (10),
b) détecter (220) un rayonnement électromagnétique provenant à travers le passage (13) de l'inducteur (10) d'une zone du composant (14) reçu dans l'inducteur, dans lequel une température associée localement à la zone respective est déterminée à partir du rayonnement détecté,
c) comparer (240) la température respectivement déterminée pour la zone respective avec une valeur de référence, et
d) réajuster (280) des paramètres de processus si une déviation est détectée entre la température détectée et la valeur de référence est déterminée lors de la comparaison, le réajustement étant effectué conformément à la déviation déterminée, dans lequel le composant (14) est monté sur un dispositif de maintien (20) réalisé de manière rotative et tourne pendant le traitement thermique autour de son axe de symétrie ou son axe médian longitudinal afin d'obtenir une distribution de température aussi homogène que possible dans le composant (14).

14. Procédé selon la revendication 13, **caractérisé en ce qu'**une température est utilisée comme valeur de référence qui est extraite d'une simulation de distribution de température pour le composant pour la zone qui est de façon correspondante à la base de la détection (220) selon l'étape de procédé b).

15. Procédé selon la revendication 14, **caractérisé en ce que** la simulation de distribution de température est effectuée sur la base d'un calcul d'un champ électromagnétique produit par l'inducteur (10), de courants de Foucault induits par le champ dans le composant, d'une énergie thermique qui y est produite par conséquent, et d'une distribution de température créée de ce fait dans le composant.

16. Procédé selon l'une quelconque des revendications 13 à 15, **caractérisé en ce que** la puissance électrique conduite à l'inducteur (10) pendant son activation, et/ou la durée de l'activation de l'inducteur (10) et/ou une vitesse d'avance à laquelle l'inducteur (10) est déplacé pendant sa durée d'activation le long de son axe longitudinal (10) sont sélectionnées comme des paramètres de processus.

17. Procédé selon l'une quelconque des revendications 14 à 16, **caractérisé en ce que** dans la simulation, la géométrie et/ou les propriétés matérielles d'un composant à traiter respectivement sont prises en compte.
